Europäisches Patentamt

European Patent Office

Office européen des brevets

(11) Veröffentlichungsnummer: **0 386 652**
**A1**

## (12) EUROPÄISCHE PATENTANMELDUNG

(21) Anmeldenummer: 90104079.0

(22) Anmeldetag: 02.03.90

(51) Int. Cl.⁵: **F16D 69/04, B23P 15/18, F16D 69/02**

(30) Priorität: 08.03.89 DE 3907443

(43) Veröffentlichungstag der Anmeldung:
**12.09.90 Patentblatt 90/37**

(84) Benannte Vertragsstaaten:
**AT DE FR GB IT**

(71) Anmelder: **MIBA FRICTEC GESELLSCHAFT m.b.H.**
**Dr.-Mitterbauer-Strasse 3**
**A-4663 Laakirchen(AT)**

(72) Erfinder: **Rössel, Erich**
**Miller v.Aichholzstrasse 18a**
**A-4810 Gmunden(AT)**
Erfinder: **Kapl, Gerhard**
**Robert-Stolz-Strasse 18**
**A-4020 Linz(AT)**
Erfinder: **Geissler, Rudolf**
**Hammersteinstrasse 10**
**A-4560 Kirchdorf(AT)**

(74) Vertreter: **Witte, Alexander, Dr.-Ing. et al**
**Augustenstrasse 7**
**D-7000 Stuttgart 1(DE)**

(54) Verfahren und Vorrichtung zum Herstellen einer Reiblamelle.

(57) Ein Verfahren und eine Vorrichtung dienen zum Herstellen einer Reiblamelle (10). Die Reiblamelle (10) besteht aus einem flachen, metallischen Stützkörper, der an seiner Oberseite und seiner Unterseite mit Reibbelägen versehen ist. Die Reibbeläge bestehen vorzugsweise aus einer kunstharzgebundenen Reibpulvermischung. Beim Herstellen der Reiblamelle werden pulverförmige Reibmaterialschichten beidseits an den Stützkörper mittels eines Beschichtungs- und Preßwerkzeuges (51, 52, 53, 100) angepreßt und der so gepreßte Grünling wird alsdann mittels Wärmebehandlung ausgehärtet.

Fig.11

EP 0 386 652 A1

## Verfahren und Vorrichtung zum Herstellen einer Reiblamelle

Die Erfindung betrifft ein Verfahren zum Herstellen einer Reiblamelle, die einen flachen metallischen Stützkörper mit einer Oberseite und einer Unterseite, sowie je einen Reibbelag auf der Oberseite und der Unterseite aufweist, wobei die Reibbeläge vorzugsweise aus einer kunstharzgebundenen Reibpulvermischung bestehen.

Die Erfindung betrifft ferner eine Vorrichtung zum Herstellen einer Reiblamelle, die einen flachen metallischen Stützkörper mit einer Oberseite und einer Unterseite, sowie je einen Reibbelag auf der Oberseite und der Unterseite aufweist, wobei die Reibbeläge vorzugsweise aus einer kunstharzgebundenen Reibpulvermischung bestehen.

Aus der AT-PS 387 395 ist ein Verfahren der eingangs genannten Art bekannt.

Bei dem bekannten Verfahren wird eine kunstharzgebundene Reibpulvermischung zunächst lose auf den Stützträger aufgebracht und dann auf eine Temperatur erwärmt, die über dem Schmelzintervall des aushärtbaren Kunststoffharzes der Reibpulvermischung liegt. Kurz bevor ein vorbestimmter Aushärtegrad des Kunststoffharzes erreicht ist, der ein nachträgliches Verpressen des Reibbelages beeinträchtigen würde, wird der Reibbelag auf seine Enddicke verpreßt. Bei diesem bekannten Verfahren ist auch vorgesehen, den Stützkörper auf beiden Seiten mit einem Reibbelag zu versehen. Hierzu wird zunächst eine Seite des Stützkörpers mit Reibpulver beschichtet, und der Stützkörper wird dann erwärmt und die Reibpulverschicht angedrückt. Der Stützträger wird dann um 180° gewendet und es wird dann auf die gegenüberliegende Seite des Stützkörpers in entsprechender Weise die zweite Reibpulverschicht aufgebracht und erwärmt. Anschließend wird der beidseitig beschichtete Stützträger in ein Preßwerkzeug eingelegt und die beiden Reibpulverschichten werden nochmals gemeinsam verpreßt.

Bei dem bekannten Verfahren wird der auf diese Weise hergestellte Preßling anschließend unter Wärmezufuhr vollständig ausgehärtet.

Bei dem bekannten Verfahren ist von Nachteil, daß zum beidseitigen Beschichten des Stützkörpers zahlreiche Arbeitsgänge erforderlich sind, mit denen nacheinander die beiden Seiten des Stützkörpers einzeln beschichtet und erwärmt werden und daß zusätzlich der Stützkörper gewendet werden muß.

Aus der DE-OS 22 06 852 sind ein Verfahren und eine Vorrichtung zum Herstellen von mit Sinterreibstoff beschichteten Stahllamellen bekannt. Hierzu wird ein metallischer Stützkörper dadurch zunächst einseitig mit einem Reibbelag versehen, daß eine flache ringförmige Wanne mit losem Reibpulver gefüllt und von unten an den metallischen Stützkörper angelegt wird. Der Stützkörper wird nun mit der angelegten Wanne um 180° gewendet, so daß jetzt eine zweite mit Reibpulver gefüllte Wanne von unten an die gegenüberliegende Seite des Stützkörpers angelegt werden kann. Der so hergestellte Verbund des Stützkörpers mit zwei auf gegenüberliegenden Seiten anliegenden, reibpulvergefüllten Wannen wird nun in einen Ofen überführt, um die lose an den Oberflächen des Stützkörpers anliegenden Reibpulverschichten anzusintern. Nach dem gleichzeitigen beidseitigen Ansintern der Reibpulverschichten werden die Wannen abgenommen. Die auf diese Weise hergestellte Reiblamelle wird anschließend zwischen zwei Preßplatten verdichtet und dann nochmals nachgesintert.

Auch bei diesem bekannten Verfahren bzw. der zum Verfahren verwendeten Vorrichtung ist nachteilig, daß zahlreiche Arbeitsgänge erforderlich sind und daß auch in diesem Falle der Stützkörper um 180° gedreht werden muß.

Außerdem beschränkt sich das Verfahren gemäß DE-OS 22 06 852 mit der zugehörigen Vorrichtung auf die Anwendung von Sinterreibstoffen, während das Verfahren gemäß AT-PS 387 395 sich auf die Anwendung von kunstharzgebundenen Reibbelägen bezieht.

Schließlich sind aus der DE-PS 36 37 386 noch ein Verfahren und eine Vorrichtung zum Herstellen von Synchronisierungskörpern in Stufengetrieben von Kraftfahrzeugen bekannt, bei denen ein Streusinter-Reibbelag auf eine konische Oberfläche eines Grundkörpers eines Synchronringes aufgebracht werden soll. Hierzu wird der Grundkörper mit einem Einsatzkörper zusammengesetzt, dessen konischer Kern einen vorbestimmten Abstand zur konischen Fläche des Grundkörpers aufweist, so daß ein umlaufender torusförmiger Hohlraum entsteht. In diesen Hohlraum wird ein Streusinter-Pulver lose eingefüllt und der Einsatzkörper wird mit dem Grundkörper bei gefülltem Hohlraum gesintert. Dabei ist auch die Möglichkeit vorgesehen, einen Synchronring beidseitig zu besintern, indem zunächst ein Reibbelag in der beschriebenen Weise auf den Innenkonus und dann mit einem entsprechenden Einsatzkörper ein zweiter Reibbelag auf den Außenkonus aufgebracht wird.

Auch bei diesem bekannten Verfahren mit der zugehörigen Vorrichtung ist somit eine zweistufige Arbeitsweise erforderlich, um ein beidseitiges Versehen eines Grundkörpers mit Reibbelägen zu erzielen.

Der Erfindung liegt demgegenüber die Aufgabe zugrunde, ein Verfahren und eine Vorrichtung der

EP 0 386 652 A1

eingangs genannten Art dahingehend weiterzubilden, daß ein metallischer Stützkörper auf möglichst einfache Weise, d.h. mit möglichst wenig Arbeitsgängen, mit Reibbelagpulver beschichtet werden kann, wobei insbesondere vermieden werden soll, den Stützkörper in Zwischenstationen des Herstellungsverfahrens mehr als nötig handhaben zu müssen.

Gemäß dem eingangs genannten Verfahren wird diese Aufgabe erfindungsgemäß durch die folgenden Verfahrensschritte gelöst:
- Transportieren von unbearbeiteten Stützkörpern zu einer Säuberungs- und Vorbereitungsanlage;
- Säubern und Vorbereiten der Oberseite und der Unterseite;
- Überführen der gesäuberten und vorbereiteten Stützkörper zu einem Beschichtungs- und Preßwerkzeug;
- Versehen der Oberseite und der Unterseite mit jeweils einer dosierten Reibmaterialschicht aus losem Reibmaterial;
- gleichzeitiges Anpressen und Verdichten der Reibmaterialschichten an die Oberseite bzw. Unterseite;
- Überführen der beschichteten Stützkörper zu einer Heizeinrichtung;
- Aushärten der verdichteten Reibmaterialschichten bei einer vorbestimmten Temperatur für eine vorbestimmte Zeit;
- vorzugsweise Maßschleifen und Rillieren.

Die der Erfindung zugrundeliegende Aufgabe wird ferner durch eine Vorrichtung der eingangs genannten Art dadurch gelöst, daß ein relativ zur Unterseite verschiebbarer Unterstempel an einer Stirnseite die Form des unteren Reibbelages aufweist und in einem ersten zum Stützkörper festen Werkzeugteil läuft, das die Stirnseite allseits umschließt, und daß oberhalb des auf dem ersten, festen Werkzeugteil aufliegenden Stützkörpers ein zweites zum Stützkörper festes Werkzeugteil anbringbar ist, das auf der Oberseite eine der Form des oberen Reibbelages entsprechendere bildet und einen Stempelabschnitt eines Oberstempels umschließt.

Die der Erfindung zugrundeliegende Aufgabe wird auf diese Weise vollkommen gelöst, weil die Zahl der Arbeitsgänge auf ein Minimum beschränkt ist, und weil vor allem der Stützkörper mit daran angesetztem Reibmaterial erst dann gehandhabt wird, wenn ein transportfähiger Preßling vorhanden ist, der den Weg von den Vorbereitungswerkzeugen zur Heizeinrichtung, in der ihm die endgültige mechanische Stabilität verliehen wird, unbeschadet überstehen kann.

Bei bevorzugten Weiterbildungen des erfindungsgemäßen Verfahrens umfaßt in an sich bekannter Weise das Vorbereiten der Oberschicht und der Unterschicht ein Sandstrahlen und es werden ferner die Stützkörper nach dem Säubern und Vorbereiten einem weiteren Beschichtungswerkzeug zugeführt und dort mit einer Haftschicht versehen.

Diese Maßnahmen haben den Vorteil, daß die Haftung der Reibbeläge an dem metallischen Stützkörper weiter verbessert werden kann.

Bevorzugt ist dabei, wenn die Haftschicht aus einem pulverförmigen oder aber aus einem flüssigen Kleber hergestellt wird, insbesondere dann, wenn der Kleber aus Phenol- oder Epoxidharz besteht und mittels einer Heizeinrichtung, vorzugsweise 1 bis 5 Minuten lang bei 70 bis 130°C geschmolzen wird.

Diese Parameter haben sich in praktischen Versuchen als besonders vorteilhaft erwiesen.

Das erfindungsgemäße Verfahren kann mit besonderem Vorteil dann eingesetzt werden, wenn zum Versehen der Oberseite und Unterseite mit der Reibmaterialschicht jeweils eine Rinne unterhalb der Unterseite und oberhalb der Oberseite gebildet und mit Reibmaterial gefüllt wird.

Diese Maßnahme hat den Vorteil, daß die Reibmaterialschicht in exakter Dosierung aufgebracht werden kann und zwar auf beiden Seiten des Stützkörpers, ohne diesen zwischenzeitlich um 180° wenden zu müssen.

Bevorzugt ist ferner, wenn die Reibmaterialschichten mittels gegenläufig wirkender Preßstempel angepreßt werden.

Diese Maßnahme hat den Vorteil, daß ein gleichmäßiges Verdichten der Reibmaterialschichten auf beiden Seiten ermöglicht wird, weil die gegenläufig wirkenden Preßstempel sich relativ zum raumfest gehaltenen metallischen Stützkörper bewegen.

Eine besonders gute Wirkung wird ferner dann erzielt, wenn die Reibmaterialschichten im Bereich zwischen 1,8 und 4 mm dick aufgebracht und beim Aufpressen auf eine Enddicke im Bereich zwischen 0,7 und 1,2 mm verdichtet werden.

Auch diese Parameter haben sich in praktischen Versuchen als besonders vorteilhaft erwiesen.

Bei weiteren bevorzugten Ausführungsbeispielen der Erfindung besteht das Reibmaterial aus 50 Gew.-% Petrolkoks, 20 Gew.-% Graphit, 20 Gew.-% Epoxidharz, 5 % Zirkonsand, 4 % Zellulose und 1 % Gleitmittel und wird vorzugsweise 4 Stunden lang bei 200°C ausgehärtet.

Bei einem alternativen Ausführungsbeispiel der Erfindung besteht das Reibmaterial aus 50 Gew.-% Petrolkoks, 20 Gew.-% Graphit, 20 Gew.-% Phenolharz, 4 % Zirkonsand, 4 % Zellulose und 2 % Friction dust und wird vorzugsweise 24 Stunden lang bei 180°C ausgehärtet.

Bei einem dritten bevorzugten Ausführungsbeispiel des erfindungsgemäßen Verfahrens besteht das Reibmaterial aus 50 Gew.-% Petrolkoks, 20 Gew.-% Graphit, 20 Gew.-% Epoxidharz, 5 % Zirkonsand, 4 % Zellulose und 1 % Gleitmittel und wird vorzugsweise 2 Stunden lang bei 200° C ausgehärtet.

Bei einem vierten bevorzugten Ausführungsbeispiel des erfindungsgemäßen Verfahrens besteht das Reibmaterial aus einer Reibpulvermischung von 76 % Eisen, 8 % Kupfer, 1 % Zinn, 4 % Graphit, 1 % Zirkonmehl und 10 % Siliciumcarbid.

Bevorzugt ist bei dem erfindungsgemäßen Verfahren ferner, wenn die Reibmaterialschichten mit einem Druck zwischen 15 und 20 $kN/cm^2$ aufgepreßt werden.

Eine weitere bevorzugte Variante des erfindungsgemäßen Verfahrens zeichnet sich dadurch aus, daß die ausgehärteten Reibbeläge zum Entfernen einer Preßhaut oberflächenbearbeitet werden.

Diese Maßnahme hat den Vorteil, daß die beim Verpressen von Reibmaterialschichten unvermeidliche Oberflächenverdichtung, die sogenannte "Preßhaut" zuverlässig entfernt werden kann, so daß auch die Oberfläche des Reibbelages mit der gewünschten Porosität an der Oberfläche zur Verfügung steht.

Ferner ist bevorzugt, wenn die ausgehärteten Reibbeläge mit einer Rillierung versehen werden, wie dies an sich bekannt ist.

Besonders bevorzugt ist jedoch, wenn die Reibmaterialschichten bereits beim Aufpressen rilliert werden.

Geschieht dies in bevorzugter Weiterbildung dieses Ausführungsbeispiels dadurch, daß die Reibmaterialschichten während des beim Aufpressen erfolgenden Rillierens unter Druck erwärmt werden, vorzugsweise 3 bis 15 Minuten lang bei einer Temperatur zwischen 200 und 250° C, so werden die Rillen in besonders genauer und reproduzierbarer Weise hergestellt, ohne daß ein besonderer Arbeitsgang erforderlich ist. Das Rillieren unter Wärmezufuhr hat dabei den Vorteil, daß ein nachträgliches "Zuwachsen" von kalt geformten Rillen sicher vermieden werden kann.

Eine bevorzugte Weiterbildung der erfindungsgemäßen Vorrichtung zeichnet sich dadurch aus, daß der Stützkörper eine zentrale Öffnung aufweist, um die herum die kreisringförmigen Reibbeläge angeordnet sind, daß das erste, feste Werkzeugteil als die Öffnung durchdringendes Säulenteil sowie als das Säulenteil in radialem Abstand umgebendes Umfangsteil ausgebildet ist, zwischen denen der als Hohlzylinder gestaltete Unterstempel läuft, daß das zweite, feste Werkzeugteil durch einen mit dem Umfangsteil fluchtenden Ring sowie das Säulenteil gebildet wird, und daß der Stempelabschnitt ebenfalls als Hohlzylinder gestaltet ist.

Diese Maßnahmen haben den Vorteil, daß Reiblamellen üblicher Bauart, wie sie für Kupplungen und Synchronringe verwendet werden, in einfacher Weise hergestellt werden können. Diese im wesentlichen drehsymmetrischen Bauelemente können nämlich mit den genannten Merkmalen deswegen in besonders einfacher Weise hergestellt werden, weil der metallische Stützkörper vom Säulenteil gehalten und zentriert wird, während das Umfangsteil, das mit dem Säulenteil raumfest verbunden ist, den metallischen Stützkörper an seinem nicht zu beschichtenden Umfang fixiert. Auf diese Weise wird eine Bezugsebene hergestellt, gegen die die Stempel des Preßwerkzeuges gegenläufig arbeiten, so daß die Reibbeläge beidseitig in identischer Weise angebracht werden können.

Bei einer bevorzugten Weiterbildung der erfindungsgemäßen Vorrichtung sind der Unterstempel an seiner Stirnseite und vorzugsweise der Oberstempel an dem Stempelabschnitt mit Erhebungen und dazwischenliegenden rillenförmigen Tälern versehen.

Diese Maßnahme hat den Vorteil, daß bereits beim beidseitigen, simultanen Anpressen der Reibbeläge ggf. erforderliche Rillen einer Rillierung angebracht werden können.

Wenn in bevorzugter Weiterbildung dieses Ausführungsbeispiels die Stirnseite und vorzugsweise der Stempelabschnitt mit einer Heizeinrichtung versehen sind, so hat dies den zusätzlichen Vorteil, daß die Erhebungen bzw. die rillenförmigen Täler etwas vorgehärtet werden können, so daß sie beim nachfolgenden Aushärten nicht mehr zuwachsen können, wie dies bei kalt gepreßten Rillen gelegentlich der Fall sein kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Schnittdarstellung durch eine Reiblamelle, wie sie nach der vorliegenden Erfindung hergestellt werden soll;

Fig. 2 eine Darstellung, ähnlich Fig. 1, jedoch zur Erläuterung von Verfahrensschritten zum Vorbehandeln der Oberfläche eines Stützkörpers;

Fig. 3 eine Darstellung, ähnlich Fig. 2, jedoch zur Erläuterung von Verfahrensschritten zum Versehen des Stützkörpers mit einer Haftgrundschicht;

Fig. 4 eine Darstellung, ähnlich Fig. 3, jedoch zum Erläutern eines weiteren Verfahrensschrittes zum Aushärten der Haftgrundschicht;

Fig. 5 bis 11 eine Schnittdarstellung eines Ausführungsbeispiels einer erfindungsgemäßen Vorrichtung zur Durchführung von Ausführungsbeispielen des erfindungsgemäßen Verfahrens, in verschiedenen Phasen des erfindungsgemäßen Verfahrens;

Fig. 12 in vergrößertem Maßstab einen Ausschnitt aus der Darstellung gemäß Fig. 11, jedoch für eine Variante der erfindungsgemäßen Vorrichtung;

Fig. 13 eine weitere ausschnittsweise Darstellung, zur Erläuterung einer weiteren Variante der Erfindung.

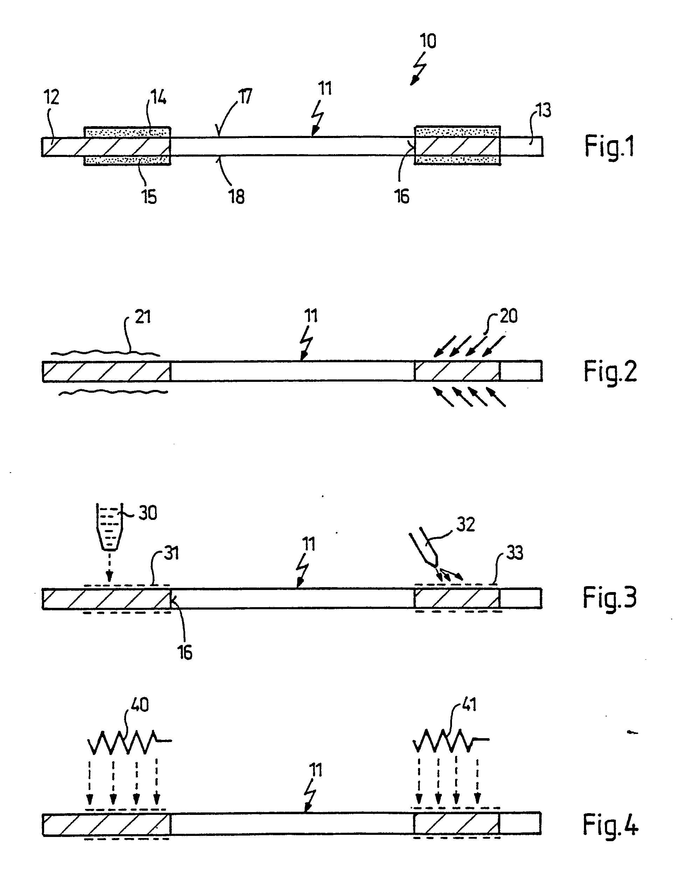

In Fig. 1 bezeichnet 10 insgesamt eine Reiblamelle, wie sie nach dem erfindungsgemäßen Verfahren bzw. mittels der erfindungsgemäßen Vorrichtung hergestellt werden soll. Die Reiblamelle 10 ist von üblicher Bauart, wie sie beispielsweise für Reibkupplungen, für Synchronringe und dgl. verwendet werden kann.

Die Reiblamelle 10 besteht aus einem metallischen Stützkörper 11, dessen Umfang beispielsweise mit einer Verzahnung versehen sein kann, wie dies in Fig. 1 am linken Rand 12 durch einen Zahn und am rechten Rand 13 mit einer Lücke angedeutet ist.

Der metallische Stützkörper 11 ist von flacher Bauart und weist eine zentrale Öffnung 16 auf. Um die zentrale Öffnung 16 herum ist auf einer Oberseite 17 des Stützkörpers 10 ein oberer Reibbelag 14 und auf einer Unterseite 18 ein unterer Reibbelag 15 angebracht.

Es versteht sich, daß die Reiblamelle auch innenverzahnt ausgebildet sein kann, so daß die Verzahnung am Umfang der zentralen Öffnung angeordnet ist.

Es versteht sich, daß die Reiblamelle 10 gemäß Fig. 1 auch ein Zwischenprodukt sein kann, das anschließend noch mittels eines Werkzeuges in eine z.B. konische Form umgeformt werden kann.

Zum Herstellen der Reiblamelle 10 wird zunächst der metallische Stützkörper 11 als Rohling, beispielsweise durch Ausstanzen aus einem geeigneten Stahlblech, hergestellt. Der Rohling des metallischen Stützkörpers 11 wird dann, wie in Fig. 2 dargestellt, vorzugsweise zunächst durch Sandstrahlen 20 an seinen Oberflächen behandelt und anschließend, wie bei 21 angedeutet, in einem entsprechenden Bad entfettet. Das Sandstrahlen kann bei bestimmten Anwendungen auch entfallen.

Der auf diese Weise an seinen Oberflächen vorbehandelte Stützkörper 11 gelangt nun in eine Beschichtungsstation, wie in Fig. 3 dargestellt.

In der Beschichtungsstation kann auf den vorbehandelten Stützkörper 11, wie in der linken Hälfte von Fig. 3 dargestellt, mittels einer Streuvorrichtung 30 ein pulverförmiger Kleber 31 aufgebracht werden. Alternativ dazu kann jedoch auch, wie in der rechten Hälfte von Fig. 3 dargestellt, mittels einer Spritzvorrichtung 32 ein flüssiger Kleber 33 auf die Oberfläche des Stützkörpers 11 aufgetragen werden. Bevorzugt geschieht dies sowohl auf der Oberseite 17 wie auf der Unterseite 18 und zwar in dem kreisringförmigen Bereich, in dem später die Reibbeläge 14, 15 angebracht werden sollen.

Wie in Fig. 4 dargestellt, kann nun der pulverförmige Kleber 31 mittels einer Heizeinrichtung 40 oder der flüssige Kleber 33 mittels einer Heizeinrichtung 41 geschmolzen werden. Der z.B. bei 70° bis 130° C geschmolzene Kleber erstarrt beim Abkühlen wieder und bildet eine feste, aushärtbare Kleberschicht. Bei Verwendung eines flüssigen Klebers wird hierbei eine Erhöhung der Viskosität erzielt. Bei lösungsmittelhaltigen Klebern kann die Temperatur zwischen 30° und 60° C liegen.

Der Stützkörper 11 ist nun hinreichend vorbereitet, um mit Reibmaterial beschichtet zu werden.

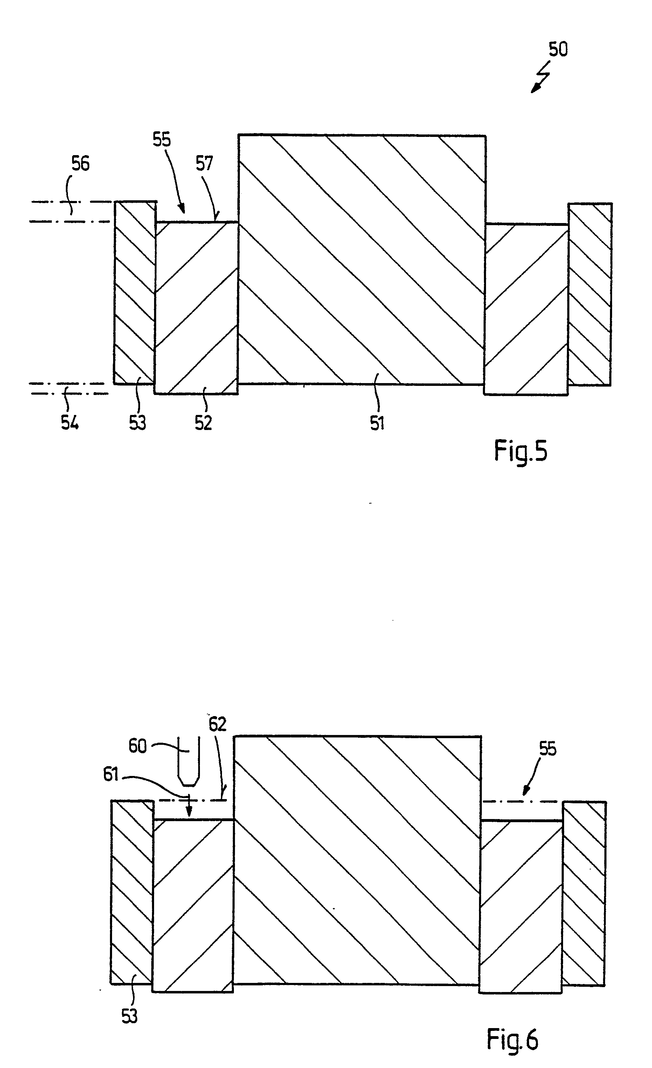

Fig. 5 zeigt ein insgesamt mit 50 bezeichnetes Beschichtungs-und Preßwerkzeug in einer ersten Ausgangsstellung.

Das Werkzeug 50 weist ein vorzugsweise raumfestes, zentrales Säulenteil 51 auf, dessen Durchmesser an den Innendurchmesser der zentralen Öffnung 16 des Stützkörpers 11 angepaßt ist. Um das Säulenteil 51 herum ist ein in der Vertikalen verfahrbarer, hohlzylinderförmiger Unterstempel 52 angebracht, der auf dem Säulenteil 51 läuft.

Wenn der Stützkörper in der oben angegebenen Weise innenverzahnt ist, wird das Säulenteil zweckmäßigerweise axial zweiteilig ausgebildet. Dabei greift ein radial zurückgesetzter, zentraler Zapfen des einen Teiles durch die von der Verzahnung gebildete lichte Öffnung hindurch und ist in dem anderen Teil in einer entsprechenden Sackbohrung zentriert. Dadurch wird beim Zusammenfügen der Teile des Säulenteiles der Stützkörper beidseitig gefaßt und gleichzeitig der ringförmige Verzahnungsbereich durch die aneinandergrenzenden Stirnflächen der Teile des Säulenteiles abgedeckt.

Den Unterstempel 52 umgibt seinerseits ein Umfangsteil 53, das ebenfalls hohlzylinderförmig ausgebildet ist und den Unterstempel 52 dicht umschließt. Das Umfangsteil 53 ist ebenfalls raumfest.

Bei dem in Fig. 5 dargestellten Ausführungsbeispiel des Werkzeuges 50 hat das Säulenteil 51 eine größere vertikale Länge als das damit verbundenen Umfangsteil 53 und dies ist wiederum vertikal länger als der Unterstempel 52. Die vertikalen Abmessungen von Unterstempel 52 und Umfangsteil 53 sind so bemessen, daß bei einem vorgegebenen Überstand 54 des Unterstempels 52 nach unten sich an einer oberen Stirnseite 57 des Unterstempels 52 eine untere kreisringförmige Rinne 55 mit vorgegebener erster Tiefe 56 ausbildet.

Fig. 6 zeigt nun, daß mittels einer Dosiervorrichtung 60 ein pulverförmiges Reibmaterial 61 in die untere Rinne 55 eingefüllt werden kann, bis ein Niveau 62 erreicht ist, das der Oberkante des Umfangsteiles 53 entspricht.

Die Dosiervorrichtung 60 kann dabei eine Streueinrichtung, ein Füllschuh oder eine Streicheinrichtung sein, um ein Reibpulver, vorzugsweise eine kunstharzgebundene Reibpulvermischung, in die untere Rinne 55 einzufüllen. Die erste Tiefe 56 der unteren Rinne 55 entspricht dabei der gewünschten Dicke der aufzubringenden Reibmaterialschicht in unverdichteten Zustand, während der Überstand 54 der Differenz dieser Dicke der unverdichteten Reibmaterialschicht zur Dicke des endverdichteten Reibbelages 14, 15 gemäß Fig. 1 entspricht.

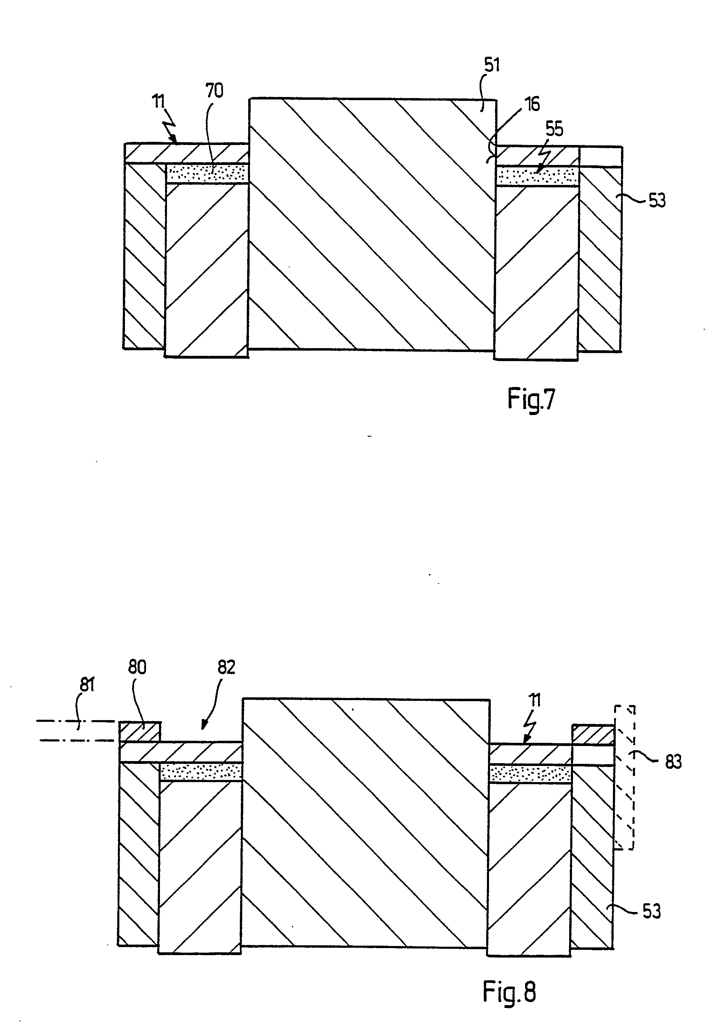

Fig. 7 zeigt, daß nun in die untere Rinne 55 eine Reibmaterialschicht 70 eingefüllt ist. Auf die Reibmaterialschicht 70 und auf die obere Stirnseite des Umfangteiles 53 wird nun der metallische Stützkörper 11 aufgelegt. Durch die zentrale Öffnung 16 wird der Stützkörper 11 am zentralen Säulenteil 51 zentriert. Die Anordnung ist dabei so gewählt, daß der Stützkörper 11 mit den gemäß den Fig. 3 und 4 aufgebrachten Schichten an Kleber 31 bzw. 33 gerade auf der Reibmaterialschicht 70 aufliegt.

Fig. 8 zeigt, daß als nächstes ein Ring 80 auf den äußeren Umfang des Stützkörpers 11 aufgelegt wird. Der Ring 80 hat eine Dicke 81, die vorzugsweise gleich der ersten Tiefe 56 gemäß Fig. 5 ist.

Auf diese Weise entsteht oberhalb des Stützkörpers 11 eine obere Rinne 82 deren Gestalt vorzugsweise mit der der unteren Rinne 55 übereinstimmt.

In der rechten Hälfte von Fig. 8 ist bei 83 angedeutet, daß für den Ring 80 am Außenumfang des Umfangsteiles 53 eine Zentrierung vorgesehen werden kann.

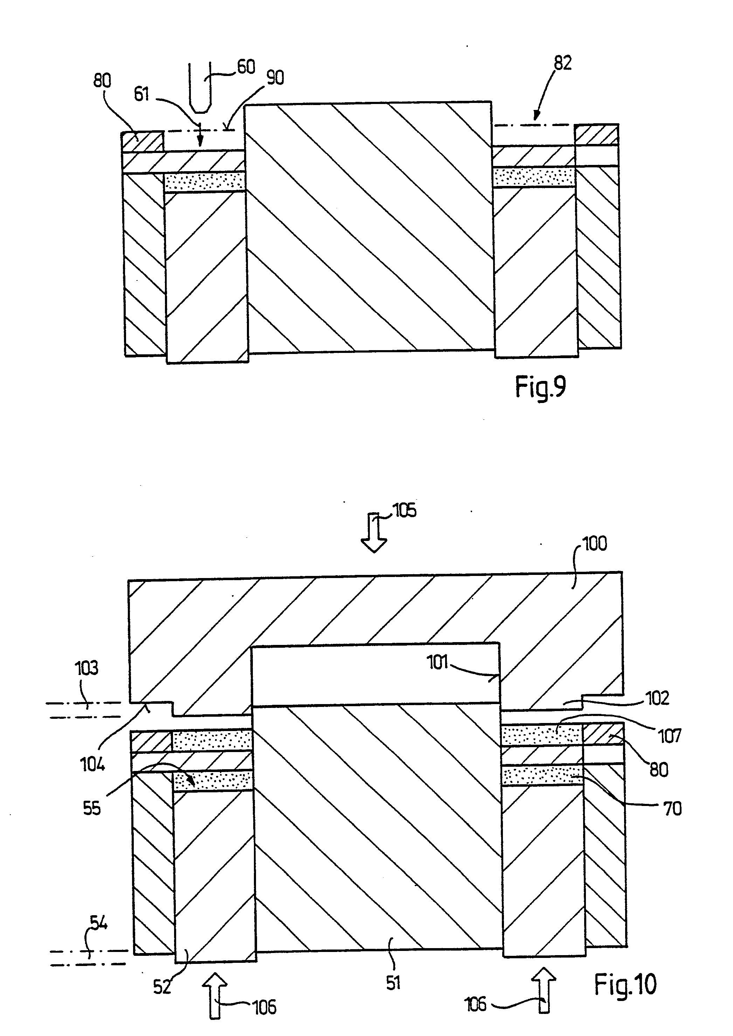

Wie aus Fig. 9 zu erkennen ist, kann nun die obere Rinne 82 mittels der Dosiervorrichtung 60 ebenfalls mit Reibmaterial 61 befüllt werden, bis ein Niveau 90 erreicht ist, das der Oberseite des Ringes 80 entspricht. Der in Fig. 9 dargestellte Vorgang entspricht somit vollkommen demjenigen der Fig. 6.

In Fig. 10 ist zu erkennen, daß nunmehr ein Oberstempel 100 von oben auf die Anordnung aufgesetzt werden kann. Der Oberstempel 100 weist eine zentrale Bohrung 101 auf, mit der er auf dem zentralen Säulenteil 51 läuft und dadurch zentriert ist.

In seinem an das Säulenteil 51 angrenzenden Bereich ist der Oberstempel 100 mit einem nach unten vorstehenden Stempelabschnitt 102 versehen. Der Stempelabschnitt 102 ist mit einer Tiefe 103 ausgebildet, die vorzugsweise gleich dem Überstand 54 der Fig. 5 ist.

Auf diese Weise wird erreicht, daß der Oberstempel 100 mit seinem um die Tiefe 103 gegenüber dem Stempelabschnitt 102 zurückgesetzten Umfang 104 von oben auf den Ring 80 aufsetzt, wenn der Oberstempel 100 in Richtung des in Fig. 10 eingezeichneten Pfeiles 105 nach unten bewegt wird.

Vorzugsweise gleichzeitig wird der Unterstempel 52 in Richtung der Pfeile 106 in Fig. 10 nach oben bewegt.

Dies hat zur Folge, daß die in der oberen Rinne 82 befindliche Reibmaterialschicht 107 durch den Stempelabschnitt 102 um die Tiefe 103 verdichtet wird, während die Reibmaterialschicht 70 in der unteren Rinne 55 um den Überstand 54 verdichtet wird.

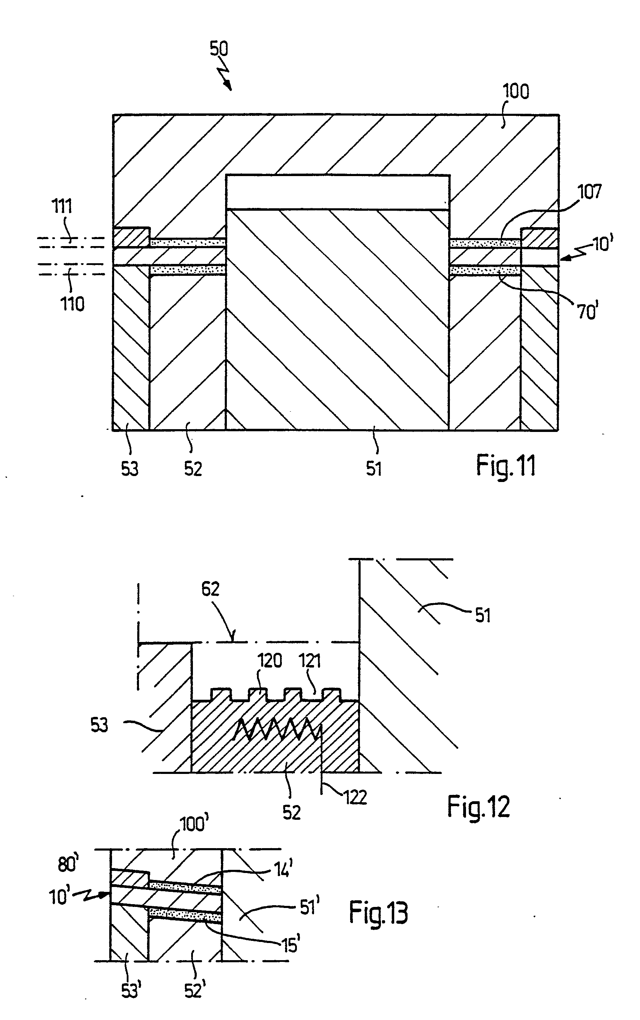

Fig. 11 zeigt diesen Endzustand mit vollständig geschlossenem Werkzeug 50, bei dem die Reibmaterialschichten 70' bzw. 107' auf ihre Enddicke 110 bzw. 111 verdichtet sind.

Man erkennt in Fig. 11, daß das Werkzeug 50 die Reiblamelle 10' in Form eines Preßlinges enthält, der in einfacher Weise ausgeformt und nun eine Heizeinrichtung zugeführt werden kann, wie sie bereits in Fig. 4 äußerst schematisch angedeutet wurde. In dieser nachfolgenden Heizeinrichtung werden die verdichteten Reibmaterialschichten 70' bzw. 107' am Stützkörper 11 ausgehärtet, so daß sie dann die Reibbeläge 14, 15 gemäß Fig. 1 bilden.

Fig. 12 zeigt in vergrößertem Maßstab noch eine Variante der erfindungsgemäßen Vorrichtung.

Man erkennt, daß die Stirnseite des Unterstempels 52 mit ringartig umlaufenden Erhebungen 120 bzw. dazwischenliegenden Tälern 121 versehen ist. Außerdem ist in die Stirnseite des Unterstempels 52 eine Heizeinrichtung 122 integriert.

Der Sinn dieser Maßnahme ist folgender:

Durch die Erhebungen 120 bzw. Täler 121 kann beim Verdichten bzw. beim simultanen Anpressen der Reibmaterialschichten 70, 107 gemäß den Fig. 10 und 11 gleichzeitig eine Rillierung mit eingepreßt werden, die später beim fertigen Reibbelag 14, 15 als Drainagenut dient. Es versteht sich dabei, daß die eingepreßte Rillierung dabei von beliebiger Gestalt sein kann.

Mit der Heizeinrichtung 122 wird die Stirnseite des Unterstempels 52 dabei auf $200° - 240°C$ erhitzt, damit die eingepreßte Rillierung in gewissem Umfang bereits vorgehärtet wird, weil die Kunstharzbestandteile an der Oberfläche der ausgebildeten Rillen infolge der Wärmeentwicklung bereits teilweise aushärten. Auf diese Weise wird der vom Kaltpressen her bekannte Effekt des "Zuwachsens" vermieden.

Schließlich zeigt Fig. 13 noch eine weitere Variante einer erfindungsgemäßen Vorrichtung, bei der sämtliche Bezugszeichen lediglich mit einem ' versehen sind, im übrigen aber mit denjenigen der Fig. 5 bis 11 übereinstimmen. Fig. 13 dient dabei lediglich zur Veranschaulichung der Tatsache, daß mit der erfindungsgemäßen Vorrichtung nicht nur ebene Reiblamellen 10, sondern auch anders geformte Reiblamellen 10', beispielsweise konisch geformte Reiblamellen 10' hergestellt werden können, wenn nur die Stirnseiten der beteiligten Elemente, also des Unterstempels 52', des Umfangsteiles 53', des Ringes 80' und des Oberstempels 100' in entsprechender Weise, beispielsweise konisch, ausgebildet sind.

Es wurde bereits erwähnt, daß das erfindungsgemäße Verfahren und die erfindungsgemäße Vorrichtung besonders geeignet sind, um im Zusammenhang mit kunstharzgebundenen Reibbelägen eingesetzt zu werden, obwohl die Erfindung nicht auf dieses Anwendungsbeispiel eingeschränkt ist, sondern auch bei metallischen Sinterreibbelägen eingesetzt werden kann.

Nachstehend sollen einige Beispiele für Werkstoffe und Verfahrensparameter beim erfindungsgemäßen Verfahren angegeben werden:

Zum Erzeugen einer Haftgrundschicht gemäß den Fig. 3 und 4 kann vorzugsweise ein pulverförmiger Kleber aus Phenol- oder Epoxidharz verwendet werden, der mit dem metallischen Stützkörper 11 durch eine kurzzeitige Wärmebehandlung verbunden wird. Die Wärmebehandlung kann beispielsweise eine Temperatur von 100° C und eine Behandlungsdauer von 1 bis 5 Minuten umfassen.

Alternativ dazu kann auch ein Flüssigkleber aus Phenol- oder Epoxidharz verwendet werden, der ebenfalls mittels einer kurzzeitigen Wärmebehandlung getrocknet wird. Die Wärmebehandlung kann beispielsweise ebenfalls eine Temperatur von 100° C und eine Behandlungsdauer zwischen 1 und 5 Minuten umfassen.

Zum Aufbringen des Reibbelages wird bei Reiblamellen 10 üblicher Bauart bevorzugt eine Ausgangsdicke, d.h. eine Tiefe der Rinnen 55 und 82 zwischen 1,8 und 4 mm gewählt, um Reibbeläge einer Enddicke zwischen 0,7 und 1,2 mm zu erzeugen.

Obwohl die Reibmaterialschichten 70, 107 auch kalt gepreßt werden können, kann, wie anhand der Fig. 12 dargestellt und beschrieben, auch ein Warmpressen insbesondere bei rillierten Preßstempeln eingesetzt werden.

Vorzugsweise wird mittels der Heizeinrichtung 122 dabei eine Temperatur im Bereich zwischen 200 und 250° C, vorzugsweise 220° C eingestellt und man läßt diese Wärme für eine Zeitdauer zwischen 3 und 15 Minuten einwirken, wenn beispielsweise Epoxidharz als Matrix des kunstharzgebundenen Reibpulvers eingesetzt wird.

Für das Aushärten des kalt- oder warmgepreßten Grünlings, wie er in Fig. 11 mit 10' bezeichnet ist, können je nach Art des verwendeten Matrixharzes die geeigneten Wärmebehandlungsparameter festgelegt werden.

Bei Verwendung von Epoxidharzen ist an einen Temperaturbereich zwischen 170 und 220° C und eine Behandlungsdauer zwischen 1 und 4 Stunden zu denken, während bei Phenolharzen an einen Temperaturbereich von ebenfalls 170 bis 220° C, jedoch an eine Behandlungsdauer zwischen 10 und 24 Stunden zu denken ist.

Die auf diese Weise ausgehärteten Reiblamellen 10 können anschließend an das Aushärten noch einer mechanischen Nachbehandlung unterworfen werden, um eine Preßhaut zu entfernen, wie sie an der Oberfläche der Reibbeläge 14, 15 durch den vorausgegangenen Verdichtungsvorgang erzeugt wurde.

Nachstehend seien noch vier Ausführungsbeispiele für Reibpulvermischungen und Behandlungsparameter angegeben:

Ausführungsbeispiel 1:

Auf einen vorbereiteten und mit einer Haftvermittlungsschicht versehenen Stützkörper 10 wird beidseitig eine Reibpulvermischung aus 50 Gew.-% Petrolkoks, 20 Gew.-% Graphit, 20 Gew.-% Epoxidharz, 5 % Zirkonsand, 4% Zellulose und 1 % Gleitmittel mit einem Druck von 20 kN/cm² aufgepreßt. Die Schichtstärke beträgt vor dem Pressen jeweils 1,8 mm. Nach dem Preßvorgang beträgt die Schichtstärke 0,7 mm. Der so hergestellte Grünling wird in einer Aushärteform zwischen Distanzhaltern aus Teflon beschichteten Stahlblechen während vier Stunden bei 200° C ausgehärtet. Nach dem Aushärten wird die Preßhaut durch eine mechanische Nachbearbeitung entfernt. Ferner wird eine Rillierung mechanisch eingebracht.

Ausführungsbeispiel 2:

Auf einen vorbereiteten, mit einer Haftvermittlungsschicht versehenen Stützkörper 11 aus Stahlblech wird beidseitig eine Reibpulvermischung aus 50 Gew.-% Petrolkoks, 20 Gew.-% Graphit, 20 Gew.-% Phenolharz, 4 % Zirkonsand, 4 % Zellulose und 2 % Friction dust mit einem Druck von 20 kN/cm² aufgepreßt. Die Schichtstärke beträgt vor dem Pressen jeweils 2,4 mm. Nach dem Preßvorgang beträgt die Schichtstärke 1 mm. Der so hergestellte Grünling wird in eine Aushärteform zwischen Distanzhaltern aus Stahlblechen während 24 Stunden bei 180° C ausgehärtet. Nach dem Aushärten wird die Preßhaut durch eine mechanische Nachbearbeitung entfernt. Ferner wird eine Rillierung mechanisch eingebracht.

Ausführungsbeispiel 3:

Auf einen vorbereiteten, mit einer Haftvermittlungsschicht versehenen Stützkörper 11 aus Stahlblech wird beidseitig eine Reibpulvermischung aus 50 Gew.-% Petrolkoks, 20 Gew.-% Graphit, 20 Gew.-% Epoxidharz, 5 % Zirkonsand, 4 % Zellulose und 1 % Gleitmittel mit einem rillierten Werkzeug bei 220°C mit einem Druck von 20 kN/cm² aufgepreßt. Das Werkstück wird mit dem Werkzeug unter einem Druck von 20 kN/cm² 5 Minuten auf 220°C erwärmt. Die Schichtstärke beträgt vor dem Pressen jeweils 2,1 mm. Nach dem Preßvorgang beträgt die Schichtstärke 0,7 mm. Der so hergestellte Grünling wird in einer Aushärteform zwischen Distanzhaltern aus Teflon beschichteten Stahlblechen während zwei Stunden bei 200°C ausgehärtet. Nach dem Aushärten wird die Preßhaut durch eine mechanische Nachbearbeitung entfernt.

Es versteht sich, daß sämtliche vorgenannten Verfahrensparameter, insbesondere die Abmessungen, Temperaturen, Behandlungsdauern, Drücke und Gewichtsbauteile um bis zu 20 % variieren können, ohne den Rahmen der Erfindung zu verlassen.

Ausführungsbeispiel 4:

Auf einen entsprechend vorbereiteten, mit einer metallischen Haftvermittlungsschicht, die entweder in Pulverform aufgestreut und anschließend erwärmt oder flammgespritzt oder in einer sonst geeigneten Form aufgebracht wird, versehenen Stützträger aus Stahlblech wird beidseitig eine Reibpulvermischung aus 76 % Eisen, 8 % Kupfer, 1 % Zinn, 4 % Graphit, 1 % Zirkonmehl und 10 % Siliciumcarbid mit einem Druck von 20 kN/cm² aufgepreßt. Die Schichtstärke beträgt vor dem Pressen jeweils 2,7 mm. Eine Rillierung kann durch die Verwendung entsprechender Preßplatten eingebracht werden. Der hergestellte Grünling wird bei 920°C 30 Minuten lang (unter Schutzgas) gesintert.

**Ansprüche**

1. Verfahren zum Herstellen einer Reiblamelle (10), die einen flachen metallischen Stützkörper (11) mit einer Oberseite (17) und einer Unterseite (18) sowie je einen Reibbelag (14, 15) auf der Oberseite (17) und der Unterseite (18) aufweist, wobei die Reibbeläge (14, 15) vorzugsweise aus einer kunstharzgebundenen Reibpulvermischung bestehen, gekennzeichnet durch die Verfahrensschritte:

- Transportieren von unbearbeiteten Stützkörpern (11) zu einer Säuberungs- und Vorbereitungsanlage (20, 21);
- Säubern und Vorbereiten der Oberseite (17) und der Unterseite (18);
- Überführen der gesäuberten und vorbereiteten Stützkörper (11) zu einem Beschichtungs- und Preßwerkzeug (50);
- Versehen der Oberseite (17) und der Unterseite (18) mit jeweils einer dosierten Reibmaterialschicht (70, 107) aus losem Reibmaterial (61);
- gleichzeitiges Verdichten und Anpressen der Reibmaterialschichten (70, 107) an die Oberseite (17) bzw. Unterseite (18);
- Überführen der beschichteten Stützkörper (11) zu einer Heizeinrichtung (40, 41);
- Aushärten der verdichteten Reibmaterialschichten (70', 107') bei einer vorbestimmten Temperatur für eine vorbestimmte Zeit;
- vorzugsweise Maßschleifen und Rillieren.

2. Verfahren nach Anspruch 1, dadurch gekennzeichnet, daß das Vorbereiten der Oberseite (17) und der Unterseite (18) ein Sandstrahlen (20) umfaßt.

3. Verfahren nach Anspruch 1 oder 2, dadurch gekennzeichnet, daß die Stützkörper (11) nach dem Säubern und Vorbereiten einem weiteren Beschichtungswerkzeug (30, 32) zugeführt und dort mit einer Haftschicht versehen werden.

4. Verfahren nach Anspruch 3, dadurch gekennzeichnet, daß die Haftschicht aus einem pulverförmigen Kleber (31) hergestellt wird.

5. Verfahren nach Anspruch 3, dadurch gekennzeichnet, daß die Haftschicht aus einem flüssigen Kleber (33) hergestellt wird.

6. Verfahren nach Anspruch 4 oder 5, dadurch gekennzeichnet, daß der Kleber (31, 33) aus Phenol- oder Epoxidharz besteht und mittels einer Heizeinrichtung (40, 41) vorzugsweise 1 bis 5 Minuten lang bei 70 - 130°C geschmolzen wird.

7. Verfahren nach einem oder mehreren der Ansprüche 1 bis 6, dadurch gekennzeichnet, daß zum Versehen der Oberseite (17) und der Unterseite (18) mit der Reibmaterialschicht (70, 107) jeweils eine Rinne (55, 82) unterhalb der Unterschicht (18) und oberhalb der Oberschicht (17) gebildet und mit Reibmaterial (61) gefüllt wird.

8. Verfahren nach einem oder mehreren der Ansprüche 1 bis 7, dadurch gekennzeichnet, daß die Reibmaterialschichten (70, 107) mittels gegenläufig wirkender Preßstempel (52, 100) angepreßt werden.

9. Verfahren nach einem oder mehreren der Ansprüche 1 bis 8, dadurch gekennzeichnet, daß die Reibmaterialschichten (70, 107) im Bereich zwischen 1,8 und 4 mm dick aufgebracht und beim Aufpressen auf eine Enddicke im Bereich zwischen 0,7 und 1,2 mm verdichtet werden.

10. Verfahren nach einem oder mehreren der Ansprüche 1 bis 9, dadurch gekennzeichnet, daß das Reibmaterial (61) zu 50 Gew.-% aus Petrolkoks, zu 20 Gew.-% aus Graphit, zu 20 Gew.-% aus Epoxidharz, zu 5 % aus Zirkonsand, zu 4 % aus Zellulose und zu 1 % aus Gleitmittel besteht und vorzugsweise 4 Stunden lang bei 200° C ausgehärtet wird.

11. Verfahren nach einem oder mehreren der Ansprüche 1 bis 9, dadurch gekennzeichnet, daß das Reibmaterial (61) aus 50 Gew.-% Petrolkoks, 20 Gew.-% Graphit, 20 Gew.-% Phenolharz, 4 % Zirkonsand, 4 % Zellulose und 2 % Friction dust besteht und vorzugsweise 24 Stunden lang bei 180° C ausgehärtet wird.

12. Verfahren nach einem oder mehreren der Ansprüche 1 bis 9, dadurch gekennzeichnet, daß das Reibmaterial aus 50 Gew.-% Petrolkoks, 20 Gew.-% Graphit, 20 Gew.-% Epoxidharz, 5 % Zirkonsand, 4 % Zellulose und 1 % Gleitmittel besteht und vorzugsweise 2 Stunden lang bei 200° C ausgehärtet wird.

13. Verfahren nach einem oder mehreren der Ansprüche 1 bis 9, dadurch gekennzeichnet, daß das Reibmaterial aus 76 % Eisen, 8 % Kupfer, 1 % Zinn, 4 % Graphit, 1 % Zirkonmehl und 10 % Siliciumcarbid besteht und vorzugsweise 30 Minuten lang bei 920° C unter Schutzgas gesintert wird.

14. Verfahren nach einem oder mehreren der Ansprüche 1 bis 13, dadurch gekennzeichnet, daß die Reibmaterialschichten (70, 107) mit einem Druck zwischen 15 und 20 kN/cm$^2$ aufgepreßt werden.

15. Verfahren nach einem oder mehreren der Ansprüche 1 bis 14, dadurch gekennzeichnet, daß die ausgehärteten Reibbeläge (14, 15) zum Entfernen einer Preßhaut oberflächenbearbeitet werden.

16. Verfahren nach einem oder mehreren der Ansprüche 1 bis 15, dadurch gekennzeichnet, daß die ausgehärteten Reibbeläge (14, 15) mit einer Rillierung versehen werden.

17. Verfahren nach einem oder mehreren der Ansprüche 1 bis 15, dadurch gekennzeichnet, daß die Reibmaterialschichten (70, 107) beim Aufpressen rilliert werden.

18. Verfahren nach einem oder mehreren der Ansprüche 1 bis 12 und Anspruch 16, dadurch gekennzeichnet, daß die Reibmaterialschichten (70, 107) während des beim Aufpressen erfolgenden Rillierens unter Druck erwärmt werden, vorzugsweise 3 bis 15 Minuten lang bei einer Temperatur zwischen 200 und 250° C.

19. Vorrichtung zum Herstellen einer Reiblamelle (10), die einen flachen metallischen Stützkörper (11) mit einer Oberseite (17) und einer Unterseite (18) sowie je einen Reibbelag (14, 15) auf der Oberseite (17) und der Unterseite (18) aufweist, dadurch gekennzeichnet, daß ein relativ zur Unterseite (18) verschiebbarer Unterstempel (52) an einer Stirnseite (57) die Form des unteren Reibbelages (15) aufweist und in einem ersten, zum Stützkörper (11) festen Werkzeugteil (51, 53) läuft, das die Stirnseite (57) allseits umschließt, und daß oberhalb des auf dem ersten, festen Werkzeugteil (53) aufliegenden Stützkörpers (11) ein zweites, zum Stützkörper (11) festes Werkzeugteil (80, 51) anbringbar ist, das auf der Oberseite (17) eine der Form des oberen Reibbelages (14) entsprechende Rinne (82) bildet und einen Stempelabschnitt (102) eines Oberstempels (100) umschließt.

20. Vorrichtung nach Anspruch 19, dadurch gekennzeichnet, daß der Stützkörper (11) eine zentrale Öffnung (16) aufweist, um die herum die kreisringförmigen Reibbeläge (14, 15) angeordnet sind, daß das erste, feste Werkzeugteil als die Öffnung (16) durchdringendes Säulenteil (51) sowie als das Säulenteil (51) im radialen Abstand umgebendes Umfangsteil (53) ausgebildet ist, zwischen denen der als Hohlzylinder gestaltete Unterstempel (52) läuft, daß das zweite feste Werkzeugteil durch einen mit dem Umfangsteil (53) fluchtenden Ring (80) sowie das Säulenteil (51) gebildet wird, und daß der Stempelabschnitt (102) ebenfalls als Hohlzylinder gestaltet ist.

21. Vorrichtung nach Anspruch 19 oder 20, dadurch gekennzeichnet, daß der Unterstempel (52) an seiner Stirnseite (57) und vorzugsweise der Oberstempel (100) an dem Stempelabschnitt (102) mit Erhebungen (120) und dazwischenliegenden rillenförmigen Tälern (121) versehen sind.

22. Vorrichtung nach Anspruch 21, dadurch gekennzeichnet, daß die Stirnseite (57) und vorzugsweise der Stempelabschnitt (102) mit einer Heizeinrichtung (122) versehen sind.

Fig.1

Fig.2

Fig.3

Fig.4

50

56
55
57

54  53  52  51

Fig.5

60  62
61  55

53

Fig.6

3411P100EP

Fig.7

Fig.8

Fig.9

Fig.10

3411P100EP

Fig.11

Fig.12

Fig.13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | AT-B- 387 395 (MIBA SINTERMETALL AG) * Insgesamt * | 1 | F 16 D 69/04 B 23 P 15/18 F 16 D 69/02 |
| A | DE-A-2 063 725 (UZINA TRACTORUL BRASOV) * Seiten 11-12; Figuren 1,2 * | 1,19 | |
| A | DE-A-3 642 800 (K.K. DAIKIN SEISAKUSHO) * Spalte 3, Zeile 18 - Spalte 4, Zeile 28; Figuren 1-3 * | 1,19 | |
| A,D | DE-A-2 206 852 (F. HECK) * Insgesamt * | 1 | |
| A | DE-A-3 609 879 (HOERBIGER & CO.) * Figuren 1-12 * | 1,16,17 | |
| A | EP-A-0 254 827 (ALLIED CORP.) * Seiten 12-13; Figuren 1-12 * | 1-6 | |
| A,D | DE-C-3 637 386 (ZWN ZAHNRADWERK NEUENSTEIN GmbH & CO.) * Insgesamt * | 1 | **RECHERCHIERTE SACHGEBIETE (Int. Cl.5)** F 16 D 69/00 B 23 P 15/00 B 25 B 27/00 |
| A | EP-A-0 292 468 (ENFO GRUNDLAGENFORSCHUNGS AG) * Insgesamt * | 1 | |
| A | DE-A-2 928 572 (GLYCO-METALL-WERKE DAELEN & LOOS GmbH) * Seiten 1-9; Figuren 1-3 * | 1 | |

Der vorliegende Recherchenbericht wurde für alle Patentansprüche erstellt

| Recherchenort | Abschlußdatum der Recherche | Prüfer |
|---|---|---|
| DEN HAAG | 11-06-1990 | BRAEMS C.G.I. |

EPO FORM 1503 03.82 (P0403)